# EUROPÄISCHE PATENTSCHRIFT

(11) **EP 3 215 957 B1**
(45) Veröffentlichungstag und Bekanntmachung des Hinweises auf die Patenterteilung: **10.04.2019**
(21) Anmeldenummer: 15787992.5
(22) Anmeldetag: 29.10.2015
(51) Int. Cl.: G06F 17/30, G07F 7/10

(54) **CHIPKARTE, CHIPKARTENSYSTEM UND VERFAHREN ZUM ZUGRIFF AUF EINE CHIPKARTE**
CHIP CARD, CHIP CARD SYSTEM, AND METHOD FOR ACCESSING A CHIP CARD
CARTE À PUCE, SYSTÈME DE CARTE À PUCE ET PROCÉDÉ D'ACCÈS À UNE CARTE À PUCE

(30) Priorität: 05.11.2014 DE 102014222625
(43) Veröffentlichungstag der Anmeldung: 13.09.2017
(73) Patentinhaber: Bundesdruckerei GmbH, 10969 Berlin (DE)
(72) Erfinder: SCHOLZE, Steffen, 13469 Berlin (DE); SCHWAN, Matthias, 10437 Berlin (DE); MÜLLER, Frank, 10407 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2015/075094
(87) Internationale Veröffentlichungsnummer: WO 2016/071193

(56) Entgegenhaltungen:
- Deepak Nagawade: "Implementation of SCOSTA-CL based Smart Card Operating System (SCSOS)", Master Thesis, Juni 2008 (2008-06), Seiten 1-66, XP055241247, Indian Institute of Technology, Kanpur, India Gefunden im Internet: URL:http://www.security.iitk.ac.in/content s/publications/more/implementation_SOCSTA- CL.pdf [gefunden am 2016-01-05]
- NAOMARU ITOI ET AL: "SCFS: A UNIX Filesystem for Smartcards", USENIX,, 14. April 1999 (1999-04-14), Seiten 1-12, XP061012601, [gefunden am 1999-04-14]
- Heng Guo: "Smart Cards and their Operating Systems", Research Seminar on Digital Media Pervasive Computing, Fall 2001,, 29. November 2001 (2001-11-29), Seiten 1-15, XP055241444, Telecommunication Software and Applications Laboratory, Helsinki University of Technology, Finland Gefunden im Internet: URL:http://www.scardsoft.com/documents/COS /heng_guo.pdf [gefunden am 2016-01-14]

## Beschreibung

Die Erfindung betrifft eine Chipkarte mit einem Chipdateisystem, ein Chipkartensystem mit einer Chipkarte und einem Chipkartenterminal sowie ein Verfahren zum Zugriff auf eine Chipkarte.

Aus dem Stand der Technik sind verschiedene Chipkartenbetriebssysteme mit einem hierarchischen Chipkartendateisystem bekannt, wie beispielsweise in der ISO/IEC 7816-4 festgelegt. Ein solches Chipkartendateisystem hat in der Regel ein Root-Verzeichnis mit der Bezeichnung "Masterfile", abgekürzt MF. Bei JavaCard-OS muss ein MF nicht zwingend vorhanden sein. Dann verwaltet jede Applikation ihre Daten in einem DF ohne übergeordnetes MF. Die Wurzel des DF wird dann mittels eines Application Identifiers (AID) direkt beim Wählen der Applikation gesetzt.

Ferner hat ein Chipkartendateisystem Verzeichnisdateien, sogenannte "Directory Files", abgekürzt DFs. Eine Datendatei ist eine von einem DF abhängige Datei, welche auch als Elementary File, abgekürzt EF bezeichnet wird.

Das Chipkartendateisystem kann auch Datenobjekte beinhalten, auf die prinzipiell kein externer Zugriff erfolgen kann. Beispielsweise beinhaltet ein solches Datenobjekt einen Schüssel, insbesondere einen privaten Schlüssel eines asymmetrischen kryptografischen Schlüsselpaars, ein Passwort und/oder kryptographische Parameter. Solche internen Datenobjekte werden auch als Internal EF bezeichnet.

Sowohl eine EF als auch eine DF kann im Stand der Technik Kontrolldaten beinhalten, wie zum Beispiel eine Zugriffsbedingung auf die EF bzw. auf die von einer DF abhängigen Dateien. Im Stand der Technik sind Nutzdaten ausschließlich in den EFs gespeichert, nicht aber in den DFs oder den MFs (vergleiche hierzu Handbuch der Chipkarten, Wolfgang Rankl, Wolfgang Effing, Carl Hanser Verlag München, 2008, Kapitel 12, insbesondere Kapitel 12.3 und 12.8.).

Hoheitliche Wert- oder Sicherheitsdokumente werden im Stand der Technik oft als Chipkarte implementiert, wie zum Beispiel der elektronische Reisepass, der elektronische Personalausweis und der elektronische Aufenthaltstitel der Bundesrepublik Deutschland. Bei solchen hoheitlichen Dokumenten ist bislang eine Änderung der Kontrolldaten im Wirkbetrieb der Chipkarte nicht möglich.

Aus dem Stand der Technik ist es ferner bekannt, bei der Personalisierung einer Chipkarte eine Datei in die Chipkarte zu schreiben, die Informationen über die auf der Chipkarte befindlichen Anwendungen und Dateien beinhaltet. Beispielsweise handelt es sich hierbei um EF.DIR nach ISO/IEC 7816-4 und ISO/IEC 7816-5.

Ferner ist es ebenfalls an sich bekannt, bei der Personalisierung eine Datei EF.COM in die Chipkarte zu schreiben, die eine Liste aller Datengruppen beinhaltet, die zum Beispiel von einem gemeinsamen Knoten in der Baumstruktur abhängig sind, wie zum Beispiel eine Liste der EFs, die zu derselben DF gehören, wie in ICAO Doc. 9303 "Machine Readable Travel Documents", Part 3, Machine Readable Official Travel Documents, Vol. 2, 3rd Ed. 2008, Part 3, Sect. III unter A1.11.1 spezifiziert.

Dokument DEEPAK NAGAWADE: "Implementation of SCOSTA-CL based Smart Card Operating System (SCSOS)", MASTER THESIS, June 2008 (2008-06-01), Indian Institute of Technology, Kanpur, India offenbart ein Betriebssystem für SmartCards, die Daten in einer baumartigen Dateistruktur speichert.

Der Erfindung liegt demgegenüber die Aufgabe zugrunde, eine verbesserte Chipkarte sowie ein entsprechendes Chipkartensystem und ein Verfahren zum Zugriff auf eine Chipkarte zu schaffen.

Die der Erfindung zugrunde liegende Aufgabe wird mit den Merkmalen der unabhängigen Patentansprüche jeweils gelöst. Ausführungsformen der Erfindung sind in den abhängigen Patentansprüchen angegeben.

Unter einer "Chipkarte" wird hier insbesondere ein Wert- oder Sicherheitsdokument verstanden, welches zumindest einen Datenspeicher zur Speicherung zumindest eines Attributs und eine Kommunikations-Schnittstelle zum Auslesen des Attributs aufweist. Vorzugsweise hat das Dokument einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Unter einem "Wert- oder Sicherheitsdokument" werden erfindungsgemäß papierbasierte und/oder kunststoffbasierte Dokumente verstanden, wie zum Beispiel elektronische Ausweisdokumente, insbesondere Reisepässe, Personalausweise, Aufenthaltstitel, Visa sowie Führerscheine, Fahrzeugscheine, Fahrzeugbriefe, Firmenaus weise, Gesundheitskarten oder andere ID-Dokumente, Zahlungsmittel, insbesondere Banknoten, Bankkarten und Kreditkarten, Frachtbriefe oder sonstige Berechtigungsnachweise, verstanden, in die ein Datenspeicher zur Speicherung des zumindest einen Attributs integriert ist.

Unter "Kontrolldaten" einer Chipkarte werden im Gegensatz zu den Nutzdaten die zugeordneten Verwaltungsdaten verstanden, die insbesondere mindestens eine Zugriffsbedingung für den Zugriff auf die Nutzdaten festlegen. Ferner können die Kontrolldaten auch eine Angabe der Position der betreffenden Datei in dem Chipkartendateisystem beinhalten, beispielsweise in Form eines Zeigers auf den jeweiligen Nachfolgerknoten in dem Dateibaum der Chipkarte, sowie z.B. einen File Identifier (FID) und einen Application Identifier (AID).

Unter "Nutzdaten" werden dabei sämtliche im Dateisystem des Chipkartenbetriebssystems gespeicherten Daten verstanden, die zur Laufzeit vom Chipkartenbetriebssystem nur intern verwendet werden können (z.B. Schlüssel und zugehörige kryptografische Parameter) oder unter Einhaltung der in den Kontrolldaten gespeicherten Zugriffsbedingungen ausgelesen werden können (z.B. Daten des Inhabers). Insbesondere werden unter "Nutzdaten" hier solche Daten verstanden, die ein mit der Chipkarte interoperables Anwendungsprogramm eines Terminals benötigt, wie zum Beispiel biometrische Daten, insbesondere Fingerabdruckdaten, Gesichtsbiometriedaten und/oder Irisscandaten, die ein Terminal für eine biometrische Authentifizierung benötigt. Solche sensitiven Nutzdaten dürfen nur nach vorheriger Authentifizierung des Terminals aus der Chipkarte ausgelesen werden, wobei die hierzu erforderlichen kryptografischen Zugriffsbedingungen durch die jeweiligen Kontrolldaten spezifiziert werden.

Unter dem "Wirkbetrieb" einer Chipkarte wird der Zustand einer Chipkarte verstanden, die eine Produktionsumgebung nach Personalisierung, insbesondere dem Laden des Chipkartenbetriebssystems und anderer Daten, verlassen hat, und die beispielsweise bereits von dem sogenannten Erstbenutzungsstatus in den Benutzt-Status übergegangen ist, vergleiche hierzu zum Beispiel DE 10 2007 041370 A1.

Unter einer "Personalisierungsanlage" wird hier eine Vorrichtung einer Chipkartenproduktion verstanden, der Chipkartenrohlinge zugeführt werden, um diese zu personalisieren, indem insbesondere das initiale Laden des Chipkartenbetriebssystems mithilfe des Bootloaders der Chipkarte sowie das Speichern weiterer Personalisierungsdaten erfolgt. Zu diesen Personalisierungsdaten können textuelle Angaben, Bilddaten, biometrische Daten des zukünftigen Inhabers der Chipkarte, wie Fingerabdruckdaten oder Irisscandaten, kryptografische Schlüssel und andere schutzbedürftige Daten, das heißt insbesondere Attribute bezüglich des Inhabers, des Herausgebers der Chipkarte oder der Chipkarte selbst gehören.

Unter einem "geschützten Speicherbereich" einer Chipkarte wird hier insbesondere ein elektronischer Speicher einer Chipkarte verstanden, in dem Daten gespeichert sind, wie zum Beispiel ein Attribut und/oder eine Datenstruktur, die aus dem elektronischen Speicher von einem Chipkartenterminal nur dann ausgelesen, gelöscht oder geändert werden können, wenn sich das Chipkartenterminal gegenüber der Chipkarte authentifiziert hat und/oder seine Berechtigung zum Lesen, Löschen und/oder Schreiben der betreffenden Daten gegenüber der Chipkarte nachgewiesen hat, beispielsweise mithilfe eines Berechtigungszertifikats, in dem solche Rechte des Chipkartenterminals spezifiziert sind. Beispielsweise kann es sich bei dem elektronischen Speicher um ein EEPROM, insbesondere ein Flash-EEPROM handeln.

Unter einer "Datenstruktur" werden hier insbesondere strukturiert abgespeicherte Daten verstanden, die beispielsweise in einer Baumstruktur oder einer Sequenz gespeichert sind.

Unter einer "Datengruppe" wird hier insbesondere ein Element der Datenstruktur verstanden, welches ein oder mehrere Datenwerte beinhalten kann.

Unter einem "Dateiidentifikator" wird hier eine Information verstanden, die für den Zugriff auf eine Datei, insbesondere eine in einer EF beinhaltete Datengruppe, erforderlich ist, wie z.B. der File Identifier (FID) oder den Application Identifier (AID) gemäß ISO/IEC 7816-4 oder ein anderer Name oder Bezeichnung, die eine Datei (EF oder DF) in dem Dateisystem der Chipkarte eindeutig identifiziert.

Ausführungsformen der Erfindung sind besonders vorteilhaft, da eine Speicherung einer Liste der Dateiidentifikatoren, wie zum Beispiel in Form einer EF.DIR und/oder einer EF.COM, bei der Personalisierung der Chipkarte unterbleiben kann. Dies hat den Vorteil, dass die Personalisierung mit einer kürzeren Zykluszeit erfolgen kann, sodass der Durchsatz der Personalisierungsanlage steigt. Ferner wird in dem nichtflüchtigen geschützten elektronischen Speicher der Chipkarte durch eine solche Liste kein Platz belegt, der mithin für andere Anwendungen freibleibt.

Dies wird dadurch ermöglicht, dass die Liste der Dateiidentifikatoren, welche ein Chipkartenterminal für einen externen Zugriff benötigt, im Wirkbetrieb der Chipkarte auf eine entsprechende Anforderung des Chipkartenterminals hin dynamisch erzeugt und in dem flüchtigen Arbeitsspeicher der Chipkarte nur temporär gespeichert wird.

Dies hat den weiteren Vorteil, dass zum Beispiel das Löschen oder Speichern zusätzlicher Dateien im Wirkbetrieb der Chipkarte ermöglicht wird, da die dynamisch erzeugte Liste jeweils den aktuellen Inhalt des Speichers der Chipkarte angibt. Alternativ kann die Liste der Dateiidentifikatoren in einem nicht-flüchtigen Speicher, das heißt der Non-Volatile Memory (NVM), der Chipkarte gespeichert werden, was vorteilhaft sein kann, um den bei einer Chipkarte oftmals sehr klein gehaltenen flüchtigen Arbeitsspeicher freizuhalten.

Nach einer Ausführungsform der Erfindung kann die Liste als EF.COM oder EF.DIR ausgebildet werden.

Nach einer Ausführungsform der Erfindung wird die Liste der Dateiidentifikatoren nicht bei jeder Abfrage der Liste neu erzeugt, sondern es wird auf die in dem flüchtigen oder nicht-flüchtigen Speicher gespeicherte Liste der Dateiidentifikatoren zugegriffen, um diese als Antwort auf die Anfrage des Chipkartenterminals an das Chipkartenterminal auszugeben. Das Chipkartenbetriebssystem der Chipkarte kann so ausgebildet sein, dass die Aktualisierung der Liste der Dateiidentifikatoren durch eines oder mehrere der folgenden Ereignisse ausgelöst wird:
- In dem Chipkartenbetriebssystem ist ein erster Zeiger für das aktuell selektierte DF und ein zweiter Zeiger für das aktuell selektierte EF gespeichert. Die Liste der Dateiidentifikatoren kann gelöscht werden, wenn sich der erste und/oder der zweite Zeiger ändert. Beispielsweise wird das EF.DIR gelöscht, wenn sich der erste Zeiger auf das aktual selektierte DF ändert. Gemäß einer weiteren Ausführungsform kann das EF.COM gelöscht werden, wenn sich zumindest einer der ersten und zweiten Zeiger ändert. Bei einem nachfolgenden Aufruf der Liste der Dateiidentifikatoren wird dann durch das Chipkartenbetriebssystem diese Liste neu generiert und gespeichert.
- Bei einer Änderung des internen Authentisierungszustandes: Für ein Chipkartenterminal mit definierten Zugriffsrechten wird bei einem ersten Zugriff auf die Chipkarte die Liste der Dateiidentifikatoren dynamisch erzeugt und gespeichert und dann bis zu einer Änderung des internen Authentisierungszustandes nicht mehr geändert. Die Erzeugung einer aktuellen Liste der Dateiidentifikatoren des Chipkartenbetriebssystems wird hier also beispielsweise durch eine Änderung der Zugriffsrechte des Chipkartenterminals auf die Chipkarte ausgelöst;
- bei einem Zurücksetzen ("Reset") der Chipkarte: In diesem Fall wird bei einem ersten Zugriff des Chipkartenterminals auf die Chipkarte die Liste der Dateiidentifikatoren von dem Chipkartenbetriebssystem dynamisch erzeugt, gespeichert und bis zum Abschalten der Chipkarte nicht mehr verändert.

Ein weiterer Vorteil der dynamischen Erzeugung ist, dass die Liste der Dateiidentifikatoren in Abhängigkeit von dem Chipkartenterminal, welches die Anforderung gesendet hat, erzeugt werden kann. Beispielsweise muss sich das Chipkartenterminal gegenüber der Chipkarte authentifizieren und seine Berechtigung zum Zugriff auf die Chipkarte nachweisen, beispielsweise mittels eines sogenannten Berechtigungszertifikats, das heißt eines digitalen Zertifikats, in dem eine Zugriffsberechtigung des Chipkartenterminals spezifiziert ist.

Das Chipkartenbetriebssystem erzeugt dann aufgrund der Anforderung des Chipkartenterminals die Liste der Dateiidentifikatoren so, dass diese Liste nur diejenigen Dateiidentifikatoren von Dateien beinhaltet, auf welche das anforderende Chipkartenterminal die erforderliche Zugriffsberechtigung hat. Hierzu gleicht das Chipkartenbetriebssystem die Zugriffsberechtigung des Chipkartenterminals mit dem jeweils in den Kontrolldaten der Dateien spezifizierten erforderlichen Berechtigungen ab, und speichert den Dateiidentifikator einer der Dateien nur dann als Teil der Liste ab, wenn die in den Kontrolldaten spezifizierte erforderliche Berechtigung mit der durch das Chipkartenterminal nachgewiesenen Berechtigung übereinstimmt.

Dies hat einerseits den Vorteil, dass die Liste nur die wirklich erforderlichen Informationen beinhaltet, sodass die Übertragung der Liste an das Chipkartenterminal entsprechend schnell erfolgen kann, und der Nutzer des Chipkartenterminals eine kurze Latenzzeit erfährt. Andererseits ist damit auch ein Sicherheitsgewinn verbunden, da ein nicht ausreichend berechtigtes Chipkartenterminal keine Information über das Vorhandensein von Daten auf der Chipkarte erhält, für welche es keine Zugriffsberechtigung hat. Insbesondere wird hierdurch auch die Privatsphäre des Inhabers der Chipkarte besonders geschützt.

Nach einer Ausführungsform der Erfindung können die Kontrolldaten, insbesondere die in den Kontrolldaten spezifizierten erforderlichen Berechtigungen, geändert werden, um zum Beispiel erhöhten Sicherheitsanforderungen Rechnung zu tragen. In diesem Fall ist besonders vorteilhaft, dass die Liste der Dateiidentifikatoren nicht statisch vorliegt, sondern dynamisch im Wirkbetrieb erzeugt wird, da solchen Änderungen auf diese Art und Weise bei der Erzeugung der Liste Rechnung getragen werden kann.

Nach einer Ausführungsform der Erfindung können neben den Dateiidentifikatoren gemäß der vom Terminal nachgewiesenen Berechtigungen zusätzliche Informationen in den dynamisch vom Chipkartenbetriebssystem erzeugten Daten enthalten sein. Dies kann zusätzliche Informationen zu den DF (z.B. Größe des verfügbaren oder belegten Nutzdatenspeichers, Anzahl der Nutzungen der Applikation, Versionsnummer der Applikation, etc.) und den EF (z.B. Auflistung der Zugriffsbedingungen für Operationen mit den Daten, Dateigröße, Dateityp, Status des Lebenszyklus, etc.) sowie zu den einer Applikation zugeordneten (und ebenfalls im Dateisystem als EF gespeicherten) internen Daten (z.B. PINs, PUKs, Schlüssel, kryptografische Parameter, etc.) und weitergehende Informationen (Zugriffsbedingungen, Dateigröße, Dateityp, Abhängigkeit und Zuordnung zu anderen Daten, etc.) zu selbigen beinhalten. Die Übermittlung der zusätzlichen Informationen erfolgt dabei entweder automatisch anhand der nachgewiesenen Berechtigungen des Terminals oderentsprechende Berechtigungen des Terminals vorausgesetzt - auf spezielle Anfrage, z.B. durch entsprechende Kodierung des Kommandos zum Auslesen der entsprechenden dynamisch erzeugten Datei.

Die Liste der Dateiidentifikatoren kann also zusätzliche Informationen beinhalten, wobei diese zusätzlichen Informationen von den Berechtigungen des Chipkartenterminals abhängen, wie sie beispielsweise in dem Zertifikat des Chipkartenterminals definiert sein können. Durch diese zusätzlichen Informationen kann die Liste der Dateiidentifikatoren ein relativ großes Datenvolumen erhalten, sodass eine Speicherung in dem nicht-flüchtigen Speicher der Chipkarte in diesem Fall vorteilhaft sein kann.

Nach Ausführungsformen der Erfindung erfolgt die Änderung der Kontrolldaten einer Chipkarte im Wirkbetrieb, das heißt nachdem eine Initialisierung und eine Personalisierung sowie die Aktivierung der Chipkarte für den Wirkbetrieb bereits stattgefunden haben. Dies wird nach Ausführungsformen der Erfindung dadurch ermöglicht, dass die Kontrolldaten eines Datenobjektes, die auch als Datendatei bezeichnet wird, das heißt z.B. eines EF, nicht unmittelbar zusammen mit den Nutzdaten des EF selbst gespeichert sind. Im Gegenteil dazu beinhalten die Nutzdaten des Datenobjektes lediglich einen Zeiger auf denjenigen Speicherbereich der Chipkarte, in dem die Nutzdaten gespeichert sind. Dies ermöglicht es z.B., die Kontrolldaten eines Datenobjektes temporär in den Arbeitsspeicher zu kopieren, die gewünschten Änderungen der Kontrolldaten in der Kopie des Arbeitsspeichers vorzunehmen, und dann die geänderte Kopie der Kontrolldaten in den geschützten elektronischen Speicher zu speichern und zu aktivieren, wobei die ursprüngliche Version der Kontrolldaten in dem geschützten elektronischen Speicher überschrieben, gelöscht oder deaktiviert wird.

Besonders vorteilhaft ist gemäß Ausführungsformen der Erfindung, dass die Kontrolldaten und die Nutzdaten unabhängig voneinander und in verschiedenen Speicherbereichen des geschützten elektronischen Speichers gespeichert werden. Die nur lose Kopplung von Kontrolldaten mit ihren Nutzdaten über den Zeiger ermöglicht es, für den Vorgang des Änderns eine Kopie der Kontrolldaten in dem Arbeitsspeicher der Chipkarte zu halten. Obwohl der Arbeitsspeicher einer Chipkarte im Allgemeinen sehr klein ist, wird dennoch eine Speicherung der Kopie der zu ändernden Kontrolldaten in dem Arbeitsspeicher dadurch ermöglicht, dass hierzu nicht auch die Nutzdaten in den Arbeitsspeicher kopiert werden müssen. Dies hat den weiteren Vorteil, dass keine erneute Personalisierung der Chipkarte mit den Nutzdaten erfolgen muss, da diese unverändert und in dem ursprünglichen Speicherbereich in dem geschützten elektronischen Speicher verbleiben können, obwohl die diesen Nutzdaten zugeordneten Kontrolldaten verändert werden.

Nach Ausführungsformen der Erfindung erfolgt eine Änderung der Kontrolldaten, indem der gesamte Dateibaum, nicht aber die Nutzdaten, in den Arbeitsspeicher kopiert und dort die Änderung der Kontrolldaten vorgenommen wird, bevor der geänderte Dateibaum den ursprünglichen Dateibaum ersetzt. Nach Ausführungsformen der Erfindung kann dies auch für einen Teilbaum des Dateibaums oder ein einzelnes Datenobjekt des Dateibaums erfolgen. Es kann auch iterativ vorgegangen werden, indem nacheinander die Kontrolldaten nur jeweils eines Datenobjektes des Dateibaums geändert werden; letzteres ist besonders vorteilhaft, wenn der Arbeitsspeicher für die Kontrolldaten aller oder mehrerer Datenobjekte nicht ausreichend groß ist.

Nach Ausführungsformen der Erfindung wird zur Änderung der Kontrolldaten initial zunächst ein Flag in dem geschützten elektronischen Speicher gesetzt, welches anzeigt, dass eine Änderung von Kontrolldaten erfolgen soll. Erst nachdem die geänderten Kontrolldaten in dem geschützten elektronischen Speicher gespeichert wurden, wird das Flag zurückgesetzt.

Dies hat den Vorteil, dass bei einem Abbruch des Änderungsverfahrens, beispielsweise durch Herausnehmen der Chipkarte aus dem Terminal, keine nur teilweise oder inkorrekte Änderung der Kontrolldaten erfolgt ist. Wird nämlich von dem Chipkartenbetriebssystem bei einer Verwendung der Chipkarte festgestellt, dass das Flag in dem geschützten elektronischen Speicher gesetzt ist, so bedeutet dies, dass die Chipkarte zunächst nicht verwendbar ist. Nach Ausführungsformen der Erfindung kann für einen solchen Fall vorgesehen sein, dass der Zustand der Chipkarte vor dem Start des Änderungsverfahrens wieder hergestellt wird, wonach dann das Flag zurückgesetzt wird und die Chipkarte wieder betriebsbereit ist. Dies kann dadurch erreicht werden, dass jeder Schritt in dem Änderungsverfahren durch Protokolldateien von dem Chipkartenbetriebssystem protokolliert wird, sodass vorgenommene Änderungen anhand dieser Protokolldateien wieder rückgängig gemacht werden können.

Nach einer anderen Ausführungsform werden die ursprünglichen Kontrolldaten nicht durch die geänderten Teile der Kontrolldaten überschrieben, sondern durch das Aktualisieren eines Zeiger auf das Wurzelverzeichnis (MF) oder das geänderte Unterverzeichnis (DF) erreicht. Dies ist ein atomarer Vorgang der entweder gar nicht oder komplett ausgeführt wird. Dadurch wird erreicht, dass entweder die kompletten ursprünglichen Kontrolldaten (MF oder DF) oder die kompletten geänderten Kontrolldaten eines Verzeichnisses (MF oder DF) zur Anwendung kommen. Dieses Vorgehen kann auch iteriert werden.

Nach einer weiteren Ausführungsform wird das Ersetzen der Kontrolldaten dadurch erreicht, dass sowohl die zu ersetzenden Kontrolldaten als auch die neuen Kontrolldaten als Kopie von einem "Master" als sogenannte "Images" vorliegen. Dann kann das Ändern der Kontrolldaten durch Überschreiben erfolgen und eine Verarbeitung durch das Chipkartenbetriebssystem ist nicht notwendig. Dies setzt allerdings voraus, dass alle Zeiger auf Nutzdaten fest vorgegeben und nicht chip-individuell sind.

Nach Ausführungsformen der Erfindung kann sich die Größe der Kontrolldaten eines Datenobjektes durch die Änderung der Kontrolldaten vergrößern. Dies kann insbesondere dann der Fall sein, wenn komplexere Zugriffsbedingungen für einen externen Zugriff auf die Nutzdaten definiert werden sollen. In diesem Fall kann die ursprüngliche Version der geänderten Datei nicht einfach durch die geänderte Version der Datei überschrieben werden, da die geänderte Datei größer ist als die ursprüngliche Datei. Nach Ausführungsformen der Erfindung erfolgt in diesem Fall durch das Chipkartenbetriebssystem eine Speicherung der geänderten Kopie der Datei in einem anderen Speicherbereich des geschützten elektronischen Speichers, der durch einen Zeiger identifiziert wird.

Um den Dateibaum des Chipkartenbetriebssystems hierdurch nicht aufzutrennen, wird ferner die Datei des Vorgängerknotens der geänderten Datei ebenfalls aktualisiert, indem nämlich der ursprüngliche Zeiger auf den Speicherbereich des Nachfolgerknotens durch den geänderten Zeiger ersetzt wird. Da sich die Länge der Zeiger auf die Speicherbereiche aber nicht voneinander unterscheidet, ist es möglich, den geänderten Vorgängerknoten durch Überschreiben der vorherigen Version zu speichern.

Nach Ausführungsformen der Erfindung erfolgt ferner eine Aktualisierung des Chipkartenbetriebssystems, beispielsweise um eine Funktionalität in dem Chipkartenbetriebssystem zur Verfügung zu stellen, die eine Prüfung der durch die geänderten Kontrolldaten spezifizierten kryptografischen Zugriffsbedingung erlaubt.

Nach einer Ausführungsform der Erfindung handelt es sich bei dem Terminal des Chipkartensystems um ein Lesegerät für ein hoheitliches Dokument, wie zum Beispiel um ein Lesegerät für einen elektronischen Personalausweis, einen elektronischen Aufenthaltstitel oder einen elektronischen Pass.

Im Weiteren werden Ausführungsformen der Erfindung mit Bezugnahme auf die Zeichnungen näher erläutert. Es zeigen:
- Figur 1: einer Blockdiagramm einer Ausführungsform eines erfindungsgemäßen Chipkartensystems und einer erfindungsgemäßen Chipkarte,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens.

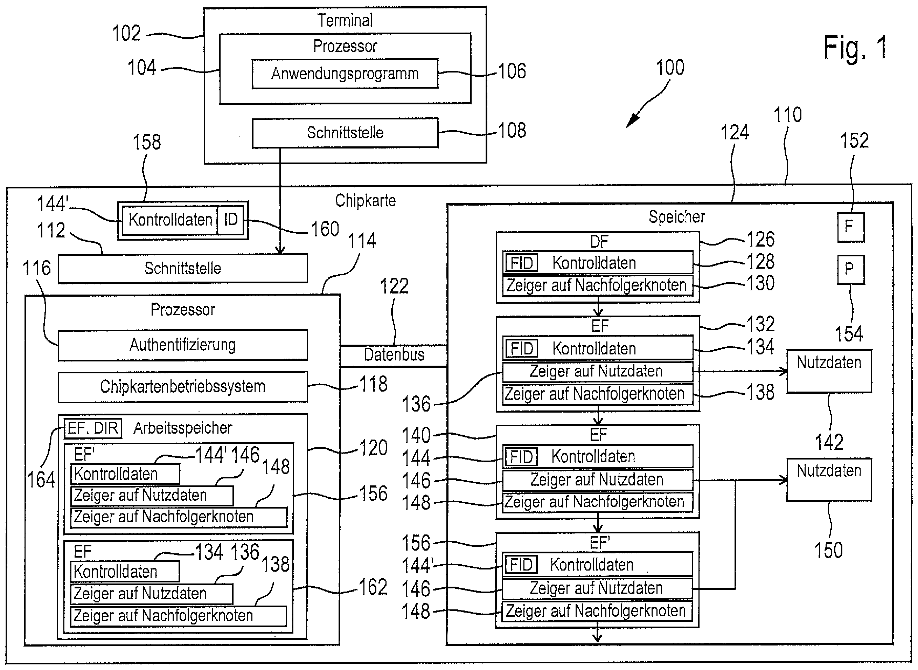

Die Figur 1 zeigt ein Chipkartensystem 100 mit einem Terminal 102. Bei dem Terminal 102 kann es sich beispielsweise um ein Lesegerät für ein hoheitliches Dokument, insbesondere für einen elektronischen Personalausweis, einen elektronischen Aufenthaltstitel oder einen elektronischen Reisepass, handeln. Der Terminal 102 hat einen Prozessor 104 zur Durchführung eines Anwendungsprogramms 106, welches mit einer Chipkarte 110 interoperabel ist, sowie eine Schnittstelle 108 zum Aufbau einer Kommunikationsverbindung mit einer entsprechenden Schnittstelle 112 der Chipkarte 110.

Die Schnittstellen 108 und 112 können als kontaktbehaftete oder drahtlose Schnittstellen ausgebildet sein, insbesondere als RFID oder NFC-Schnittstellen. Vorzugsweise verfügt die Chipkarte 110 nicht über eine eigene Energieversorgung, sondern wird durch Einkopplung elektromagnetischer Energie von der Schnittstelle 108 in die Schnittstelle 112 mit elektrischer Energie versorgt, wozu die Schnittstelle 112 im Falle der drahtlosen Ausprägung eine Antenne aufweist.

Die Chipkarte 110 hat einen Prozessor 114 zur Durchführung eines Programmmoduls 116 für die Authentifizierung des Terminals 102 oder die gegenseitige Authentifizierung des Terminals 102 und der Chipkarte 110. Hierzu kann das Programmmodul 116 beispielsweise diejenigen Schritte eines Challenge-Response-Protokolls implementieren, welche die Chipkarte 110 betreffen, wobei das Anwendungsprogramm 106 dann diejenigen Schritte des Challenge-Response-Protokolls implementieren kann, welche das Terminal 102 betreffen. Eine andere Möglichkeit ist die Authentifizierung mittels einer geheimen Kennung, z.B. einer sog. PIN, die ein Nutzer in das Terminal eingibt, und die von dem Programmmoduls 116 überprüft wird, z.B. nach dem PACE Protokoll, wie es vom Bundesamt für Sicherheit in der Informationsstechnik (BSI) spezifiziert worden ist.

Der Prozessor 114 dient ferner zur Ausführung eines Chipkartenbetriebssystems 118 und hat einen flüchtigen Arbeitsspeicher 120. Der Prozessor 116 ist mit der Schnittstelle 112 der Chipkarte 110 verbunden sowie über einen internen Datenbus 122 mit einem nichtflüchtigen geschützten elektronischen Speicher 124.

In dem Speicher 124 sind Dateien eines Chipkartendateisystems gespeichert, die einen Dateibaum bilden. Die Figur 1 zeigt exemplarisch eine DF 126 des Dateibaums, die Kontrolldaten 128 einschließlich eines Zeigers 130 auf einen Nachfolgerknoten, das heißt die EF 132, beinhaltet. Die EF 132 beinhaltet ebenfalls Kontrolldaten 134, einschließlich einem Zeiger 138 auf deren Nachfolgerknoten in dem Dateibaum, nämlich ein EF 140 sowie einen Zeiger 136 auf Nutzdaten 142, die der EF 132 zugeordnet sind, die aber nicht in der EF 132 oder einer anderen Datei des Dateibaums gespeichert sind.

Eine dazu analoge Struktur hat die EF 140, die Kontrolldaten 144 beinhaltet, einschließlich eines Zeigers 146, auf die der EF 140 zugeordneten Nutzdaten 150 und einen Zeiger 148 auf einem in der Figur 1 nicht gezeigten Nachfolgerknoten der EF 140 in dem Dateibaum.

Jede der Dateien des Chipkartenbetriebssystems 118 hat einen Dateiidentifikator, also beispielsweise einen Dateinamen, mithilfe dessen auf die betreffende Datei zugegriffen werden kann, sofern die hierzu erforderlichen Berechtigungen vorliegen. Bei einem solchen Dateiidentifikator kann es sich beispielsweise um einen sogenannten File Identifier (FID) gemäß ISO/IEC 7816-4 handeln.
Das Chipkartenbetriebssystem 118 ist dazu ausgebildet, eine Baumtraversierung des in dem Speicher 124 gebildeten Dateibaums durchzuführen, das heißt einen sogenannten Tree Traversal, über den das Chipkartenbetriebssystem 180 sämtliche der zu der Baumstruktur gehörenden Dateien ermitteln kann. Beispielsweise ist in dem Chipkartenbetriebssystem 118 ein Pre-Order, In-Order oder Post-Order Tree Traversal Algorithmus implementiert.

Zur Durchführung von zum Beispiel eines Lesezugriffs des Chipkartenterminals 102 auf die Chipkarte 110 wird beispielsweise wie folgt vorgegangen:
1. Das Chipkartenterminal 102 authentifiziert sich gegenüber der Chipkarte 110, indem das kryptografische Protokoll durchgeführt wird. Hierbei kann das Chipkartenterminal 102 auch ein Berechtigungszertifikat an die Chipkarte 110 übertragen, in dem eine Berechtigung des Chipkartenterminals 102 zum Lesen von in der Chipkarte 110 gespeicherten Dateien spezifiziert ist.
2. Aufgrund einer Anforderung des Chipkartenterminals 102 zum Lesen einer Liste von Dateiidentifikatoren, zum Beispiel zum Lesen von EF.DIR, führt das Chipkartenbetriebssystem 118 einen Tree Traversal der von den Dateien in den Speicher 124 gebildeten Baumstruktur durch, um sämtliche zu der Baumstruktur gehörenden Dateien zu ermitteln und deren FIDs zu lesen. Mithilfe dieser FIDs erzeugt das Chipkartenbetriebssystem die Liste 164, das heißt hier die EF.DIR. Die Liste 164 wird in dem Arbeitsspeicher 120 gespeichert und von dort von der Chipkarte 110 als Antwort auf die Anforderung an das Chipkartenterminal 102 übertragen.
3. Das Chipkartenterminal 102 kann dann mithilfe einer der Dateiidentifikatoren, die in der empfangenen Liste 164 beinhaltet sind, auf die betreffende Datei zugreifen, wobei je nach der Berechtigung des Chipkartenterminals 102 ein Lese- und/oder Schreibzugriff möglich ist.

Je nach Ausführungsform wird bei der Erzeugung der Liste 164 durch das Chipkartenbetriebssystem 118 die Berechtigung des Chipkartenterminals 102 berücksichtigt, indem nur die Dateiidentifikatoren derjenigen Dateien des Speichers 124 in die Liste 164 aufgenommen werden, für welche der Chipkartenterminal 102 die erforderliche Zugriffsberechtigung hat. Die jeweils erforderlichen Zugriffsberechtigungen sind in den Kontrolldaten der Dateien spezifiziert.

Je nach Ausführungsform kann die Liste 164 aus dem Arbeitsspeicher 120 gelöscht werden, nachdem die Antwort auf die Anforderung des Chipkartenterminals 102 von der Chipkarte 110 gesendet worden ist. Alternativ kann die Liste 164 in dem Arbeitsspeicher 120 der Chipkarte oder in dem nicht-flüchtigen Speicher 124 gespeichert werden, damit sie bei einer erneuten Anforderung des Chipkartenterminals 102 zum Lesen der Liste von Dateiidentifikatoren nicht erneut generiert werden muss, sondern aus dem jeweiligen Speicher ausgelesen werden kann. Die Aktualisierung der in dem Arbeitsspeicher 120 oder dem nicht-flüchtigen Speicher 124 gespeicherten Liste 164 durch das Chipkartenbetriebssystem 118 kann dann aufgrund des Eintretens eines vordefinierten Ereignisses erfolgen, wie zum Beispiel einer geänderten Selektion einer DF, einer Änderung des internen Authentisierungsstatus oder aufgrund eines Resets.

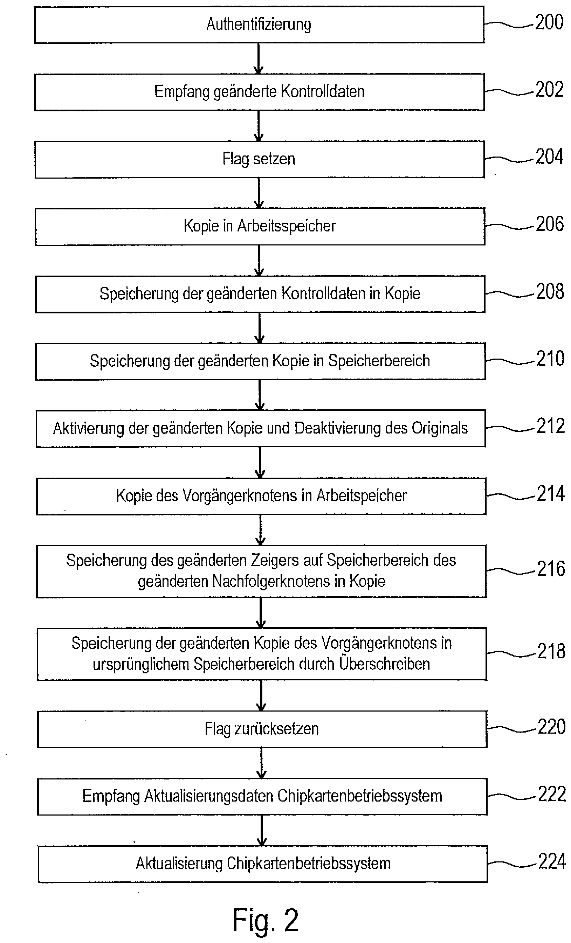

Zur Aktualisierung der Kontrolldaten 144 der EF 140 kann beispielsweise wie folgt vorgegangen werden, wie in der Figur 2 gezeigt:
In dem Schritt 200 erfolgt zunächst eine Authentifizierung des Terminals 102 gegenüber der Chipkarte 110. Neben der Authentifizierung kann auch eine Berechtigungsprüfung erfolgen, nämlich dahingehend, ob das Terminal 102 die erforderlichen Rechte zur Änderung von Kontrolldaten hat. Dies kann beispielsweise so erfolgen, dass das Terminal 102 ein Berechtigungszertifikat an die Chipkarte 110 überträgt, wobei in dem Berechtigungszertifikat die Rechte des Terminals 102 zur Änderung der Kontrolldaten angegeben sind.

In dem Schritt 202 empfängt die Chipkarte 110 von dem Terminal 102 geänderte Kontrolldaten, beispielsweise indem das Anwendungsprogramm 106 eine Kommando-APDU 158 von der Schnittstelle 108 an die Schnittstelle 112 sendet, welche die geänderten Kontrolldaten beinhaltet sowie auch eine Spezifikation der Datei des Chipkartendateisystems, deren Kontrolldaten zu ändern sind. Ohne Beschränkung der Allgemeinheit wird im Weiteren beispielhaft davon ausgegangen, dass es sich hierbei um die EF 140 bzw. deren Kontrolldaten 144 handelt.

In dem Schritt 204 setzt das Chipkartenbetriebssystem 118 ein Flag F 152 in dem Speicher 124. Ferner kann auch eine Protokolldatei P in dem Speicher 124 angelegt werden, um die nachfolgenden Schritte zur Änderung der Kontrolldaten zu protokollieren.

In dem Schritt 206 greift das Chipkartenbetriebssystem 118 über den internen Datenbus 122 auf den Speicher 124 zu, und liest die EF 140. Das Chipkartenbetriebssystem 118 speichert dann eine Kopie 156 der EF 140 in dem Arbeitsspeicher 120 ab. Die Kontrolldaten 144 der Kopie 156 werden dann aktualisiert. Hierzu beinhaltet die Kommando-APDU 158 die geänderten Kontrolldaten 144' und einen Identifikator (ID) 160 derjenigen Datei, deren Kontrolldaten zu ändern sind, hier der EF 140.

Das Chipkartenbetriebssystem 118 schreibt die geänderten Kontrolldaten 144' der APDU 158 in die Kopie 156 der EF 140, die temporär in dem Arbeitsspeicher 120 gespeichert ist und ersetzt hierdurch die vorherige Version der Kontrolldaten 144. Die Zeiger 146 und 148 bleiben hingegen unverändert (Schritt 208).

In dem Schritt 210 wird dann die geänderte Kopie EF' 156 der EF 140 in einem Speicherbereich des Speichers 124 gespeichert, der von dem Speicherbereich, in dem die EF 140 gespeichert ist, verschieden ist. Dies ist insbesondere dann erforderlich, wenn die Kontrolldaten 144' ein größeres Volumen haben als die Kontrolldaten 144, sodass die geänderte Kopie 156 größer ist als die Vorgängerversion, das heißt die EF 140. In dem Schritt 214 wird die geänderte Kopie 156, die in dem Speicher 124 gespeichert ist, aktiviert und das Original, das heißt die EF 140, deaktiviert oder gelöscht.

Da sich der Speicherbereich, in dem der Nachfolgerknoten der EF 132 gespeichert ist, geändert hat, wird nunmehr auch die EF 132 aktualisiert, indem in dem Schritt 214 eine Kopie 162 der EF 132 temporär in dem Arbeitsspeicher 120 gespeichert wird und in dem Schritt 216 der Zeiger 138 auf den Nachfolgerknoten in der Kopie 162 aktualisiert wird, indem der vorherige Zeiger auf die EF 140 durch einen Zeiger auf den Speicherbereich in dem Speicher 124 der Kopie EF' 156 ersetzt wird. Die übrigen Kontrolldaten 134 einschließlich des Zeigers auf die Nutzdaten 136 können unverändert bleiben.

In dem Schritt 218 wird dann die geänderte Kopie 162 der EF 132 in dem Speicher 124 gespeichert, wobei dies so erfolgen kann, dass die EF 132 durch die Kopie 162 überschrieben wird. Dies ist möglich, da lediglich der Zeiger 138 aktualisiert wurde, sodass die Dateigröße der EF 132 und der geänderte Kopie 162 identisch sind.

Nachdem hierdurch der Änderungsvorgang der Kontrolldaten abgeschlossen worden ist, wird in dem Schritt 220 das Flag 152 zurückgesetzt und die Protokolldatei 154 wird gelöscht.

Anschließend kann auch eine Aktualisierung des Chipkartenbetriebssystems 118 erfolgen. Dies kann dann erforderlich sein, wenn die ursprüngliche Version des Chipkartenbetriebssystems 118 keine Funktion beinhaltet, um eine durch die geänderten Kontrolldaten 144' spezifizierte kryptografische Zugriffsbedingung auf die Nutzdaten 150 zu prüfen.

Beispielsweise wird durch die Kontrolldaten 144 als Zugriffsbedingung eine sogenannte Basic Access Control (BAC) spezifiziert, wohingegen durch die Kontrolldaten 144' zusätzlich zu der BAC eine Extended Access Control (EAC) gefordert wird, um auf die Nutzdaten 150 von extern lesend zugreifen zu können.

Falls die Vorversion des Chipkartenbetriebssystems 118 nur BAC, nicht aber EAC unterstützt, ist dann eine Aktualisierung des Chipkartenbetriebssystems 118 erforderlich, um auch die EAC-Funktionalität zur Verfügung zu stellen. Hierzu empfängt die Chipkarte 110 von dem Terminal 102 Aktualisierungsdaten für das Chipkartenbetriebssystem 118, welche Programmcodes für die Implementierung der zusätzlichen Funktion beinhalten. Anhand dieser Aktualisierungsdaten erfolgt dann in dem Schritt 224 eine Aktualisierung des Chipkartenbetriebssystems 118.

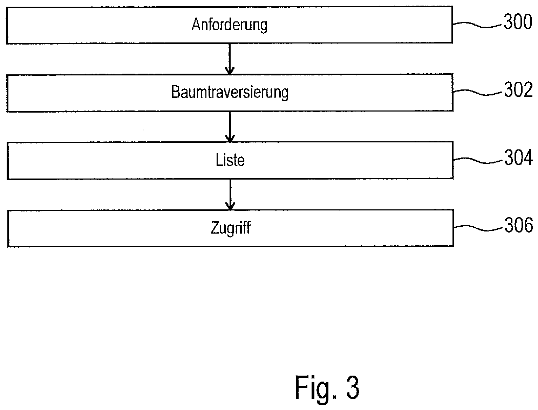

Die Figur 3 zeigt eine Ausführungsform eines erfindungsgemäßen Verfahrens. In dem Schritt 300 empfängt die Chipkarte 110, in der zunächst keine Liste 164 gespeichert ist, eine Anforderung für eine solche Liste, insbesondere für EF.DIR, von dem Chipkartenterminal 102 (vergleiche Figur 1). Daraufhin führt das Chipkartenbetriebssystem 118 der Chipkarte 110 in dem Schritt 302 eine Baumtraversierung des in dem Speicher 124 durch die dort gespeicherten Dateien gebildeten Dateibaums durch, um die Dateiidentifikatoren, das heißt die FIDs, der Dateien zu lesen und damit die Liste 164 in dem flüchtigen Arbeitsspeicher 120 zu erzeugen.

In dem Schritt 304 wird diese Liste 164 dann von der Chipkarte 110 an das Chipkartenterminal 102 übertragen. In dem Schritt 306 führt das Chipkartenterminal 102 zum Beispiel einen Lesezugriff auf eine der Dateien durch, deren Dateiidentifikatoren in der Liste 164 beinhaltet sind.

Besonders vorteilhaft ist hierbei, dass in der Personalisierungsphase der Chipkarte die Liste der Dateiidentifikatoren nicht in der Chipkarte 110 gespeichert werden muss, sondern dass diese dynamisch im Wirkbetrieb der Chipkarte 110 von dem Chipkartenbetriebssystem 118 erzeugt wird, sodass dem jeweils aktuellen Zustand des Dateibaums hinsichtlich der darin beinhalteten Dateien und/oder hinsichtlich der jeweils aktuell erforderlichen Zugriffsberechtigungen Rechnung getragen werden kann.

### Bezugszeichenliste

- 100: Chipkartensystem
- 102: Terminal
- 104: Prozessor
- 106: Anwendung
- 108: Schnittstelle
- 110: Chipkarte
- 112: Schnittstelle
- 114: Prozessor
- 116: Programm
- 118: Chipkartenbetriebssystem
- 120: Arbeitsspeicher
- 122: Datenbus
- 124: Speicher
- 126: DF
- 128: Kontrolldaten
- 130: Zeiger
- 132: EF
- 134: Kontrolldaten
- 136: Zeiger
- 138: Zeiger
- 140: EF
- 140': EF
- 142: Nutzdaten
- 144: Kontrolldaten
- 144': geänderte Kontrolldaten
- 146: Zeiger
- 148: Zeiger
- 150: Nutzdaten
- 152: Flag (F)
- 154: Protokolldatei (P)
- 156: Kopie der EF 140
- 158: APDU
- 160: Identifikator
- 162: Kopie der EF 132
- 164: Liste

## Patentansprüche

1. Chipkarte mit einem Chipkartenbetriebssystem (118) und einem hierarchischen Chipkartendateisystem, einem nicht-flüchtigen geschützten elektronischen Speicher (124), auf den ein externer Zugriff nur über einen Prozessor (114) der Chipkarte möglich ist, und einem flüchtigen Arbeitsspeicher (120), wobei in dem nicht-flüchtigen elektronischen Speicher Dateien (126, 132, 140,...) des Chipkartendateisystems gespeichert sind, wobei die Dateien jeweils einen Dateiidentifikator (FID) beinhalten, der für einen externen Zugriff benötigt wird, und ein Dateibaum für das Chipkartendateisystem dadurch gebildet wird, dass eine der Dateien jeweils einen Zeiger (130, 138, 148,...) auf eine andere der Dateien aufweist, wobei das Chipkartenbetriebssystem dazu ausgebildet ist aufgrund des Empfangs einer Anforderung über eine externe Schnittstelle der Chipkarte eine Baumtraversierung des Dateibaums durchzuführen, um die Dateiidentifikatoren der Dateien zu lesen und eine Liste (164) der Dateiidentifikatoren zu erzeugen, wobei das Chipkartenbetriebssystem dazu ausgebildet ist, die Liste als Antwort auf die Anforderung über die externe Schnittstelle auszugeben.

2. Chipkarte nach Anspruch 1, wobei die Dateien Verzeichnisdateien (DFs) und Datendateien (EFs) beinhalten, wobei das Chipkartenbetriebssystem dazu ausgebildet ist, ein Auswahlsignal für eine der Verzeichnisdateien über die externe Schnittstelle zu empfangen und die Baumtraversierung nur für einen Teilbaum des Dateibaums durchzuführen, der die ausgewählte Verzeichnisdatei als Wurzelknoten hat, sodass die erzeugte Liste nur Dateiidentifikatoren von Dateien des Teilbaums beinhaltet.

3. Chipkarte nach Anspruch 1 oder 2, wobei die Dateien Kontrolldaten für Nutzdaten beinhalten, wobei die Kontrolldaten die für einen externen Zugriff auf die Nutzdaten erforderlichen Berechtigungen spezifizieren, und das Chipkartenbetriebssystem so ausgebildet ist, dass sich ein Chipkartenterminal gegenüber der Chipkarte für einen externen Zugriff authentifizieren und seine Berechtigung nachweisen muss, wobei nur diejenigen Dateiidentifikatoren in die Liste aufgenommen werden, für die das Chipkartenterminal die erforderliche Berechtigung hat.

4. Chipkarte nach einem der vorhergehenden Ansprüche, wobei das Chipkartenbetriebssystem so ausgebildet ist, dass über die externe Schnittstelle eine Datei in den nicht-flüchtigen geschützten elektronischen Speicher geschrieben werden kann oder eine der Dateien des Dateibaums gelöscht werden kann, sofern ein Chipkartenterminal die hierzu erforderliche Berechtigung gegenüber der Chipkarte nachweist und/oder wobei das Chipkartenbetriebssystem so ausgebildet ist, dass die Liste (164) der Dateiidentifikatoren in dem flüchtigen Arbeitsspeicher oder dem nicht-flüchtigen elektronischen Speicher gespeichert wird und/oder wobei das Chipkartenbetriebssystem dazu ausgebildet ist, die Liste (164) der Dateiidentifikatoren unmittelbar nach Senden der Antwort auf die Anforderung zu löschen.

5. Chipkarte nach Anspruch 4, wobei das Chipkartenbetriebssystem so ausgebildet ist, dass die Liste (164) der Dateiidentifikatoren in dem flüchtigen Arbeitsspeicher oder dem nicht-flüchtigen elektronischen Speicher gespeichert wird und dass die gespeicherte Liste (164) der Dateiidentifikatoren aufgrund des Eintritts eines vordefinierten Ereignisses erneut erzeugt wird.

6. Chipkarte nach einem der vorhergehenden Ansprüche, wobei das Chipkartenbetriebssystem dazu ausgebildet ist, dass die Liste (164) der Dateiidentifikatoren Zusatzinformationen beinhaltet, die von der Zugriffsberechtigung des Chipkartenterminals abhängen.

7. Chipkarte nach einem der vorhergehenden Ansprüche, wobei in zumindest einer der Dateien Kontrolldaten für Nutzdaten gespeichert sind, die Nutzdaten in einem Speicherbereich des geschützten elektronischen Speichers gespeichert sind und ein Zeiger auf diesen Speicherbereich in der zumindest einen Datendatei gespeichert ist, wobei die Chipkarte für den Wirkbetrieb aktiviert ist, wobei das Chipkartenbetriebssystem so ausgebildet ist, dass zur Änderung der Kontrolldaten eine Kopie (156) zumindest eines die Datei (140) beinhaltenden Teilbaums des Dateibaums in der Chipkarte temporär in dem Arbeitsspeicher (120) gespeichert wird, geänderte Kontrolldaten (144') in der zumindest einen Datei des kopierten Teilbaums gespeichert werden, und die geänderte Kopie des Teilbaums in dem geschützten elektronischen Speicher permanent gespeichert wird, wobei durch die Änderung der Kontrolldaten die für einen externen Zugriff auf die Nutzdaten erforderliche Berechtigung, welche das externe Chipkartenterminal nachweisen muss, geändert wird.

8. Chipkarte nach Anspruch 7, wobei das Chipkartenbetriebssystem so ausgebildet ist, dass zur Änderung der Kontrolldaten einer der Dateien (140) so vorgegangen wird, dass initial von dem Chipkartenbetriebssystem ein Flag (152) in dem Arbeitsspeicher (120) gesetzt wird, welches den Beginn des Änderungsvorgangs zur Änderung der Kontrolldaten anzeigt, wobei die geänderten Kontrolldaten (144') ein größeres Datenvolumen haben als die ursprünglichen Kontrolldaten (144), sodass die geänderte Kopie (156) der zumindest einen Datei (140) des Teilbaums ein vergrößertes Datenvolumen hat, sodass die geänderte Kopie (156) in einem anderen Adressbereich des nichtflüchtigen elektronischen Speichers (124) gespeichert wird als die ursprüngliche Datei (140), wobei eine Datei (132) eines Vorgängerknotens der geänderten Datei in dem Teilbaum aktualisiert wird, indem das Chipkartenbetriebssystem eine Kopie (162) der Datei (132) des Vorgängerknotens in der Chipkarte temporär in dem Arbeitsspeicher speichert, einen in den Kontrolldaten der Datei beinhalteten Zeiger (138) auf den Nachfolgerknoten durch einen aktualisierten Zeiger auf den Speicherbereich ersetzt, indem die aktualisierte Datei (156) des Nachfolgerknotens gespeichert wurde, die geänderte Kopie (162) der Datei des Vorgängersknotens in dem geschützten elektronischen Speicher permanent gespeichert und aktiviert wird, in dem die ursprüngliche Datei des Vorgängerknotens überschrieben wird, wobei abschließend das Flag gelöscht wird.

9. Chipkarte nach Anspruch 7 oder 8, wobei das Chipkartenbetriebssystem so ausgebildet ist, dass die geänderten Kontrolldaten nur dann gespeichert werden, wenn die Berechtigungsprüfung des Terminals ergeben hat, dass die hierzu erforderliche Berechtigung vorliegt, wobei das Chipkartenbetriebssystem so ausgebildet ist, dass hierzu die folgenden Schritte durchgeführt werden:
- Authentifizierung eines Terminals (102) gegenüber der Chipkarte,
- Empfang von Änderungskontrolldaten (144'), die eine Änderung der Kontrolldaten spezifizieren, durch die Chipkarte,
- Durchführung einer Berechtigungsprüfung durch die Chipkarte, ob das Terminal zur Änderung der Kontrolldaten ausreichend berechtigt ist.

10. Chipkarte nach einem der vorhergehenden Ansprüche, wobei die Chipkarte eine drahtlose Schnittstelle (112) zur Kommunikation mit dem Terminal, insbesondere zum Empfang der Änderungskontrolldaten, und zur Einkopplung von elektrischer Energie zur Energieversorgung der Chipkarte aufweist.

11. Chipkarte nach einem der vorhergehenden Ansprüche, wobei die Kontrolldaten eine kryptographische Zugriffsbedingung für einen externen Zugriff auf die Nutzdaten beinhalten und das Chipkartenbetriebssystem so ausgebildet ist, dass die Erfüllung der kryptografischen Zugriffsbedingung durch das Chipkartenbetriebssystem (118) überprüft wird, bevor durch das Chipkartenbetriebssystem ein Zugriff über einen internen Datenbus (122) der Chipkarte auf den geschützten elektronischen Speicher erfolgt, um die Nutzdaten (150) zu lesen und über eine Chipkartenschnittstelle (112) auszugeben, wobei die Chipkartenschnittstelle vorzugsweise drahtlos ausgebildet ist und sowohl zur Kommunikation als auch zur Einkopplung von elektrischer Energie zum Betrieb der Chipkarte dient, wobei ferner das in dem Speicher der Chipkarte gespeicherte Chipkartenbetriebssystem aktualisierbar ist, so dass eine aktualisierte Version des Chipkartenbetriebssystems eine Funktion beinhaltet, die die Überprüfung der kryptografischen Zugriffsbedingung entsprechend der aktualisierten Kontrolldaten ermöglicht.

12. Chipkarte nach einem der vorhergehenden Ansprüche, wobei das Chipkartenbetriebssystem so ausgebildet ist, dass für einen externen Schreibzugriff zur Änderung der Kontrolldaten eine Authentifizierung und eine Berechtigungsprüfung mit Hilfe eines Zertifikats durchgeführt werden, wobei das Terminal direkt mit einer Chipkartenschnittstelle der Chipkarte oder über ein Netzwerk kommuniziert.

13. Chipkartensystem mit einem Chipkartenterminal (102) und einer Chipkarte (110) nach einem der vorhergehenden Ansprüche, wobei das Chipkartenterminal zum Senden von Änderungskontrolldaten, die eine Änderung von Kontrolldaten spezifizieren, an die Chipkarte ausgebildet ist und/oder wobei das Chipkartenterminal zur Speicherung oder Löschung von Nutzdaten in dem nicht-flüchtigen geschützten elektronischen Speicher der Chipkarte ausgebildet ist.

14. Verfahren zum Zugriff auf eine Chipkarte nach einem der vorhergehenden Ansprüche 1 bis 16 durch einen Chipkartenterminal mit folgenden Schritten:
- Empfang einer Anforderung über die externe Schnittstelle der Chipkarte,
- Durchführung einer Baumtraversierung des Dateibaums, um die Dateiidentifikatoren der Dateien zu lesen und eine Liste der Dateiidentifikatoren in dem flüchtigen Arbeitsspeicher zu erzeugen,
- Ausgabe der Liste als Antwort auf die Anforderung über die externe Schnittstelle,
- Zugriff auf zumindest eine der Dateien mithilfe des in der Liste beinhalteten Dateiidentifikators dieser Datei durch das Chipkartenterminal über die externe Schnittstelle.

15. Verfahren nach Anspruch 14, wobei in einer Initialisierungsphase der Chipkarte der unpersonalisierte Dateibaum in den geschützten elektronischen Speicher gespeichert wird und in der Initialisierungsphase die Kontrolldaten für die Nutzdaten gespeichert werden, und anschließend in einer Personalisierungsphase die Nutzdaten (150) und ein den Nutzdaten zugeordneten Zeiger (146) gespeichert werden, wobei nach der Personalisierungsphase die Chipkarte für den Wirkbetrieb aktiviert wird, ohne dass in der Personalisierungsphase die Liste der Dateiidentifikatoren in der Chipkarte gespeichert wird.

## Claims

1. A chip card comprising a chip card operating system (118) and a hierarchical chip card file system, a non-volatile protected electronic memory (124), to which external access is possible only via a processor (114) of the chip card, and a volatile main memory (120), wherein files (126, 132, 140, ...) of the chip card file system are stored in the non-volatile electronic memory, wherein the files each contain a file identifier (FID), which is required for external access, and a file tree for the chip card file system, **characterised in that** each of the files has a pointer (130, 138, 148, ...) to another of the files, wherein the chip card operating system is configured to traverse the file tree on account of the receipt of a request via an external interface of the chip card, so as to read the file identifiers of the files and generate a list (164) of the file identifiers, wherein the chip card operating system is configured to output the list via the external interface, as a response to the request

2. The chip card according to claim 1, wherein the files contain directory files (DFs) and data files (EFs), wherein the chip card operating system is configured to receive a selection signal for one of the directory files via the external interface and to traverse the file tree only for a subtree of the file tree which has the selected directory file as root node, so that the generated list contains only file identifiers of files of the subtree.

3. The chip card according to claim 1 or 2, wherein the files contain control data for payload data, wherein the control data specify the authorisations necessary for external access to the payload data, and the chip card operating system is configured such that a chip card terminal must authenticate itself to the chip card for external access and must prove its authorisation, wherein only those file identifiers for which the chip card terminal has the necessary authorisation are included in the list.

4. The chip card according to any one of the preceding claims,
wherein the chip card operating system is configured such that a file can be written into the non-volatile protected electronic memory or one of the files of the file tree can be deleted via the external interface if a chip card terminal demonstrates the authorisation necessary for this to the chip card, and/or wherein the chip card operating system is configured such that the list (164) of the file identifiers is stored in the volatile main memory or the non-volatile electronic memory, and/or wherein the chip card operating system is configured to delete the list (164) of the file identifiers immediately once the response to the request has been sent.

5. The chip card according to claim 4, wherein the chip card operating system is configured such that the list (164) of the file identifiers is stored in the volatile main memory or the non-volatile electronic memory, and in that the stored list (164) of the file identifiers is generated on account of the fact that a predefined event has occurred.

6. The chip card according to any one of the preceding claims,
wherein the chip card operating system is configured such that the list (164) of the file identifiers contains additional information which is dependent on the access authorisation of the chip card terminal.

7. The chip card according to any one of the preceding claims,
wherein control data for payload data are stored in at least one of the files, the payload data are stored in a memory area of the protected electronic memory, and a pointer to this memory area is stored in the at least one data file, wherein the chip card is activated for active operation, wherein the chip card operating system is configured such that, in order to modify the control data, a copy (156) of at least one subtree of the file tree in the chip card containing the file (140) is stored temporarily in the main memory (120), modified control data (144') are stored in the at least one file of the copied subtree, and the modified copy of the subtree is permanently stored in the protected electronic memory, wherein, as a result of the modification of the control data, the authorisation necessary for external access to the payload data which must be demonstrated by the external chip card terminal is modified.

8. The chip card according to claim 7, wherein the chip card operating system is configured such that, in order to modify the control data of one of the files (140), a flag (152) is initially placed in the main memory (120) by the chip card operating system and indicates the start of the modification process for modifying the control data, wherein the modified control data (144') have a greater data volume than the original control data (144), and therefore the amended copy (156) of the at least one file (140) of the subtree has an enlarged data volume, and therefore the modified copy (156) is stored in a different address area of the non-volatile electronic memory (124) as compared to the original file (140), wherein a file (132) of a predecessor node of the modified file is updated in the subtree in that the chip card operating system stores a copy (162) of the file (132) of the predecessor node in the chip card temporarily in the main memory, a pointer (138), contained in the control data of the file, to the successor node is replaced by an updated pointer to the memory area in which the updated file (156) of the successor node was stored, and the modified copy (162) of the file of the predecessor node is permanently stored in the protected electronic memory and is activated in that the original file of the predecessor node is overwritten, wherein the flag lastly is deleted.

9. The chip card according to claim 7 or 8, wherein the chip card operating system is configured such that the amended control data are stored only if the authorisation check performed by the terminal has revealed that the authorisation necessary for this is present, wherein the chip card operating system is configured such that the following steps are carried out for this purpose:
- authenticating a terminal (102) to the chip card,
- receiving modification control data (144'), which specify a modification of the control data, by the chip card,
- performing an authorisation check by the chip card in order to check whether the terminal is sufficiently authorised to modify the control data.

10. The chip card according to any one of the preceding claims, wherein the chip card has a wireless interface (112) for communicating with the terminal, in particular for receiving the modification control data, and for coupling in electrical energy for supplying energy to the chip card.

11. The chip card according to any one of the preceding claims, wherein the control data contain a cryptographic access condition for external access to the payload data, and the chip card operating system is configured such that the fulfilment of the cryptographic access condition by the chip card operating system (118) is checked before the chip card operating system can access the protected electronic memory via an internal data bus (122) of the chip card in order to read the payload data (150) and to output said data via a chip card interface (112), wherein the chip card interface is preferably wireless and is used both for communication and for the coupling-in of electrical energy for operation of the chip card, wherein the chip card operating system stored in the memory of the chip card also can be updated, such that an updated version of the chip card operating system includes a function that enables the cryptographic access condition to be checked in accordance with the updated control data.

12. The chip card according to any one of the preceding claims,
wherein the chip card operating system is configured such that an authentication and an authorisation check are performed with the aid of a certificate for external write access for modification of the control data, wherein the terminal communicates with a chip card interface of the chip card directly or via a network.

13. A chip card system comprising a chip card terminal (102) and a chip card (110) according to any one of the preceding claims, wherein the chip card terminal is configured to send modification control data, which specify a modification of control data, to the chip card, and/or wherein the chip card terminal is configured to store or delete payload data and the non-volatile protected electronic memory of the chip card.

14. A method for accessing a chip card according to any one of preceding claims 1 to 16 by a chip card terminal, said method comprising the following steps:
- receiving a request via the external interface of the chip card,
- traversing the file tree in order to read the file identifiers of the files and to generate a list of the file identifiers in the volatile main memory,
- outputting the list as a response to the request via the external interface,
- accessing at least one of the files with the aid of the file identifier of this file contained in the list by the chip card terminal via the external interface.

15. The method according to claim 14, wherein in an initialisation phase of the chip card the unpersonalised file tree is stored in the protected electronic memory, and in the initialisation phase the control data for the payload data are stored, and then in a personalisation phase the payload data (150) and a pointer (146) associated with the payload data are stored, wherein, following the personalisation phase, the chip card is activated for active operation without the list of the file identifiers being stored in the chip card in the personalisation phase.

## Revendications

1. Carte à puce dotée d'un système d'exploitation de carte à puce (118) et d'un système de fichiers de carte à puce hiérarchique, d'une mémoire électronique (124) sécurisée non volatile, sur laquelle un accès extérieur n'est possible que par le biais d'un processeur (114) de la carte à puce, et d'une mémoire de travail (120) volatile, où des fichiers (126, 132, 140, ...) du système de fichiers de carte à puce sont stockés dans la mémoire électronique non volatile, où les fichiers contiennent respectivement un identificateur de fichier (FID) qui est nécessaire pour un accès extérieur et une arborescence de fichiers pour le système de données de carte à puce est formée en ce qu'un des fichiers présente respectivement un pointeur (130, 138, 148, ...) pour un autre des fichiers, où le système d'exploitation de carte à puce est conçu pour exécuter, en raison de la réception d'une demande, une traversée d'arborescence de l'arborescence de fichiers par le biais d'une interface extérieure de la carte à puce afin de lire les identificateurs de fichiers et de générer une liste (164) des identificateurs de fichiers, où le système d'exploitation de carte à puce est conçu pour éditer la liste en tant que réponse à la demande par le biais de l'interface extérieure.

2. Carte à puce selon la revendication 1, dans laquelle les fichiers contiennent des fichiers d'annuaire (DF) et des fichiers de données (EF), le système d'exploitation de carte à puce étant prévu pour réceptionner un signal de sélection pour l'un des fichiers d'annuaire par le biais de l'interface extérieure et pour exécuter la traversée d'arborescence uniquement pour une arborescence partielle de l'arborescence de fichiers qui possède le fichier d'annuaire choisi en tant que noeud racine, de sorte que la liste générée ne contient que des identificateurs de fichier de fichiers de l'arborescence partielle.

3. Carte à puce selon la revendication 1 ou la revendication 2, dans laquelle les fichiers contiennent des données de commande pour des données utiles, où les données de commande spécifient les autorisations nécessaires pour un accès extérieur sur les données utiles et le système d'exploitation de la carte à puce est conçu de telle manière qu'un terminal de carte à puce doit s'authentifier vis-à-vis de la carte à puce pour un accès extérieur et doit renseigner son autorisation, où, uniquement les identificateurs de fichiers en question pour lesquels le terminal de cartes à puce a l'autorisation nécessaire peuvent être enregistrés dans la liste.

4. Carte à puce selon l'une des revendications précédentes, dans laquelle le système d'exploitation de carte à puce est conçu de telle manière qu'un fichier peut être écrit dans la mémoire électronique sécurisée non volatile par le biais de l'interface extérieure ou que l'un des fichiers de l'arborescence de fichiers peut être effacé dans la mesure où un terminal de cartes à puce indique l'autorisation nécessaire à cet effet vis-à-vis de la carte à puce, et/ou où le système d'exploitation de carte à puce est conçu de telle manière que la liste (164) des identificateurs de fichiers est stockée dans la mémoire de travail volatile ou dans la mémoire électronique non volatile, et/ou où le système d'exploitation de carte à puce est conçu pour effacer la liste (164) des identificateurs de fichiers immédiatement après l'envoi de la réponse suite à la demande.

5. Carte à puce selon la revendication 4, dans laquelle le système d'exploitation de la carte à puce est conçu de telle manière que la liste (164) des identificateurs de fichiers est stockée dans la mémoire de travail volatile ou dans la mémoire électronique non volatile et que
la liste (164) des identificateurs de fichiers stockée est de nouveau générée en raison de la survenue d'un évènement prédéfini.

6. Carte à puce selon l'une des revendications précédentes, dans laquelle le système d'exploitation de carte à puce est conçu de telle manière que la liste (164) des identificateurs de fichiers contient des informations complémentaires qui dépendent de l'autorisation d'accès du terminal de carte à puce.

7. Carte à puce selon l'une des revendications précédentes, dans laquelle, dans au moins l'un des fichiers, sont stockées des données de commande pour des données utiles, les données utiles sont stockées dans une zone de mémoire de la mémoire électronique sécurisée et un pointeur est stocké sur cette zone de mémoire dans l'au moins un fichier de données, où la carte à puce est activée pour le fonctionnement opérationnel, où le système d'exploitation de carte à puce est conçu de telle manière qu'une copie (156) d'au moins une arborescence partielle contenant le fichier (140) est stockée temporairement dans la mémoire de travail (120) pour la modification des données de commande, que des données de commande (144') modifiées sont stockées dans l'au moins un fichier de l'arborescence partielle copiée et que la copie de l'arborescence partielle modifiée est stockée de manière permanente dans la mémoire électronique sécurisée, où, par la modification des données de commande, l'autorisation nécessaire pour un accès extérieur sur les données utiles, laquelle doit renseigner le terminal de carte à puce extérieur, est modifiée.

8. Carte à puce selon la revendication 7, dans laquelle le système d'exploitation de carte à puce est conçu de telle manière que, pour la modification des données de commande de l'un des fichiers (140), on procède de sorte qu'initialement un drapeau (152) est fixé dans la mémoire de travail (120) par le système d'exploitation de carte à puce, lequel indique le début du processus de modification pour la modification des données de commande, où les données de commande (144') modifiées ont un volume de données plus important que les données de commande (144) d'origine, de sorte que la copie (156) modifiée de l'au moins un fichier (140) de l'arborescence partielle a un volume de données agrandi, de sorte que la copie (156) modifiée est stockée dans une autre zone d'adresse modifiée de la mémoire électronique sécurisée (124) non volatile que le fichier (140) d'origine, où un fichier (132) d'un noeud précédent du fichier modifié est actualisé dans l'arborescence partielle en ce que le système d'exploitation de carte à puce stocke temporairement une copie (162) du fichier (132) du noeud précédent dans la carte à puce, remplace un pointeur (138) contenant les données de commande du fichier sur le noeud suivant par un pointeur actualisé sur la zone de mémoire en ce que le fichier (156) actualisé du noeud suivant a été stocké, stocke de manière permanente la copie (162) modifiée du fichier du noeud précédent dans la mémoire électronique sécurisée et l'active en ce que le fichier d'origine du noeud précédent est réécrit dessus, où finalement le drapeau est effacé.

9. Carte à puce selon la revendication 7 ou la revendication 8, dans laquelle le système d'exploitation de carte à puce est conçu de telle manière que les données de commande modifiées ne sont stockées que si la vérification d'autorisation du terminal a eu pour résultat que l'autorisation nécessaire à cet effet est présente, où le système d'exploitation de carte à puce est conçu de telle manière que les étapes suivantes soient exécutées à cet effet :
- l'authentification d'un terminal (102) vis-à-vis de la carte à puce,
- la réception de données de commande de modification (144') qui spécifient une modification des données de commande, par la carte à puce,
- l'exécution d'une vérification d'autorisation par la carte à puce si le terminal est suffisamment habilité pour la modification des données de commande.

10. Carte à puce selon l'une des revendications précédentes, où la carte à puce présente une interface (112) sans fil pour la communication avec le terminal, notamment, pour la réception des données de commande de modification, et pour le couplage d'énergie électrique pour l'alimentation en énergie de la carte à puce.

11. Carte à puce selon l'une des revendications précédentes, dans laquelle les données de commande contiennent une condition d'accès cryptographique pour un accès extérieur sur les données utiles et le système d'exploitation de carte à puce est conçu de sorte que la satisfaction de la condition d'accès cryptographique soit vérifiée par le système d'exploitation de carte à puce (118) avant qu'il n'y ait un accès par le système d'exploitation de carte à puce sur la mémoire électronique sécurisée par le biais d'un bus de données (122) interne de la carte à puce, afin de lire les données utiles (150) et de les éditer par le biais d'une interface de carte à puce (112), où l'interface de carte à puce est de préférence conçue sans fil et sert à la fois pour la communication et le couplage d'énergie électrique pour le fonctionnement de la carte à puce, où, en outre, le système d'exploitation de carte à puce stocké dans la mémoire de la carte à puce peut être actualisé de sorte qu'une version actualisée du système d'exploitation de carte à puce contient une fonction qui permet la vérification de la condition d'accès cryptographique correspondant aux données de commande actualisées.

12. Carte à puce selon l'une des revendications précédentes, dans laquelle le système d'exploitation de carte à puce est conçu de telle manière qu'une authentification et une vérification d'autorisation à l'aide d'un certificat pour la modification des données de commande sont exécutées pour un accès en écriture extérieur, où le terminal communique directement avec une interface de carte à puce de la carte à puce ou par le biais d'un réseau.

13. Système de carte à puce doté d'un terminal de carte à puce (102) et d'une carte à puce (110) selon l'une des revendications précédentes, où le terminal de carte à puce est conçu pour l'envoi à la carte à puce de données de commande de modification qui spécifient une modification de données de commande et/ou où le terminal de carte à puce est conçu pour le stockage ou l'effacement de données utiles dans la mémoire électronique sécurisé non volatile de la carte à puce.

14. Procédé permettant l'accès à une carte à puce selon l'une des revendications précédentes 1 à 16 par un terminal de carte à puce, avec les étapes suivantes :
- la réception d'une demande par le biais de l'interface extérieure de la carte à puce,
- l'exécution d'une traversée d'arborescence de l'arborescence de fichiers, afin de lire les identificateurs de fichier des fichiers et de générer une liste des identificateurs de fichiers dans la mémoire de travail volatile,
- l'édition de la liste en réponse à la demande par le biais de l'interface extérieure,
- l'accès à au moins l'un des fichiers à l'aide de l'identificateur de fichier de ce fichier contenu dans la liste par le terminal de carte à puce par le biais de l'interface extérieure.

15. Procédé selon la revendication 14, dans lequel, dans une phase d'initialisation de la carte à puce, l'arborescence de fichiers non personnalisée est stockée dans la mémoire électronique sécurisée et les données utiles sont stockées dans la phase d'initialisation des données de commande, et ensuite sont stockées dans une phase de personnalisation des données utiles (150) et dans un pointeur (146) associé aux données utiles, où, après la phase de personnalisation, la carte à puce est activée pour le fonctionnement actif sans que la liste des identificateurs de fichiers ne soit stockée dans la phase de personnalisation dans la carte à puce.
